# EUROPÄISCHE PATENTSCHRIFT

(11) **EP 4 095 017 B1**
(45) Veröffentlichungstag und Bekanntmachung des Hinweises auf die Patenterteilung: **02.07.2025**
(21) Anmeldenummer: 22172652.4
(22) Anmeldetag: 10.05.2022
(51) Int. Cl.: B62D 15/02, B62D 5/04

(54) **LENKAKTUATOR FÜR EIN LENKSYSTEM UND LENKSYSTEM FÜR EIN KRAFTFAHRZEUG**
STEERING ACTUATOR FOR A STEERING SYSTEM AND STEERING SYSTEM FOR A MOTOR VEHICLE
ACTIONNEUR DE DIRECTION POUR SYSTÈME DE DIRECTION ET SYSTÈME DE DIRECTION POUR VÉHICULE AUTOMOBILE

(30) Priorität: 26.05.2021 DE 102021205316
(43) Veröffentlichungstag der Anmeldung: 30.11.2022
(73) Patentinhaber: thyssenkrupp Presta AG, 9492 Eschen (LI); thyssenkrupp AG, 45143 Essen (DE)
(72) Erfinder: Malacci, Luca, 8172 Niederglatt (CH); Raither, Dr. Wolfram, 9475 Sevelen (CH)
(74) Vertreter: thyssenkrupp Intellectual Property GmbH

(56) Entgegenhaltungen:
- CN-A- 110 588 765
- DE-A1- 102020 101 481
- DE-U1- 202022 102 496
- JP-A- 2017 096 638
- JP-A- H1 183 415
- US-A1- 2005 037 884

## Beschreibung

### Stand der Technik

Die Erfindung betrifft einen Lenkaktuator für ein Lenksystem für ein Kraftfahrzeug, umfassend eine translatorisch in ihrer Längsrichtung verschiebbare Aktuatorstange und eine zur Erfassung der linearen Position der Aktuatorstange ausgebildete Positionssensorvorrichtung, wobei die Positionssensorvorrichtung einen Rotationssensor umfasst, der eine um eine Achse drehbare Sensorwelle mit einem Laufrad aufweist, welches drehfest auf der Sensorwelle angebracht ist und auf einer korrespondierenden linearen Laufbahn der Aktuatorstange abrollbar ist, um eine translatorische Bewegung der Aktuatorstange in eine Rotation der Sensorwelle umzusetzen. Ein Lenksystem für ein Kraftfahrzeug mit einem derartigen Lenkaktuator ist ebenfalls Gegenstand der Erfindung.

In einem Kraftfahrzeug-Lenksystem wird der mechanische Lenkeinschlag der lenkbaren Räder mittels eines oder mehrerer Lenkaktuatoren erzeugt.

Ein gattungsgemäßer Lenkaktuator weist eine Aktuatorstange auf, die in ihrer Längsrichtung üblicherweise quer zur Fahrtrichtung relativ zur Fahrzeugkarosserie bewegbar ist. Bei einer konventionellen Lenkung ist die in der Regel quer zur Fahrrichtung angeordnete Aktuatorstange an die Achsschenkel der beiden lenkbaren Räder einer Fahrzeugachse angelenkt, und bei einer Einzelradlenkung entsprechend mit einem einzelnen lenkbaren Rad verbunden. Die Lenkkraft des Lenkaktuators bewirkt über die translatorische Verschiebung der Aktuatorstange einen Lenkeinschlag der lenkbaren Räder.

Ein Lenkbefehl kann in den Lenkaktuator mechanisch eingekoppelt werden, beispielsweise über eine manuelle Drehung einer Lenkwelle eines klassischen Zahnstangen-Lenkgetriebes, die über ein Lenkritzel in eine Zahnstange der Aktuatorstange eingreift. Alternativ oder zusätzlich kann ein motorischer Antrieb oder Hilfsantrieb zur Verstärkung oder anstelle der manuellen Lenkeingabe vorgesehen sein. Durch den üblicherweise elektrischen motorischen Antrieb kann ein Lenkmoment in die Lenkwelle eingekoppelt werden, oder alternativ oder zusätzlich kann die Aktuatorstange motorisch verschoben werden.

Steer-by-Wire-Lenksysteme weisen keine mechanische Verbindung zwischen einer manuell drehbaren Lenkwelle und der Aktuatorstange auf. Der motorische Antrieb kann in den Lenkaktuator integriert sein, oder an diesen angekoppelt sein, um einen elektrischen Lenkbefehl in eine entsprechende Verschiebung der Aktuatorstange umzusetzen.

Der Lenkeinschlag der lenkbaren Räder kann zur Überwachung und Steuerung der Lenkung mittels einer elektronischen Positionssensorvorrichtung erfasst werden. Diese misst durch eine geeignete elektronische Sensorik, beispielsweise durch resistive, induktive, opto-elektronische oder andere Messverfahren, die aktuelle lineare Position der Aktuatorstange, die eindeutig mit dem Lenkeinschlag korreliert ist. Im Stand der Technik wird beispielsweise in der WO 2018/233849 A1 vorgeschlagen, in Längsrichtung codierte Positionsmarken unmittelbar auf der Aktuatorstange anzubringen, die zur Bestimmung der Längenposition von einem Sensor gelesen werden können. Nachteilig ist jedoch, dass bereits geringe Verunreinigungen der Zahnstange, beispielsweise durch Schmiermittel oder Staub, die Messung beeinträchtigen können, wodurch die Herstellung aufwendig, und der Betrieb relativ störanfällig ist.

Ein Lenkaktuator der eingangs beschriebenen Art ist aus der CN 110 588 765 A bekannt. Nachteilig daran ist, dass im Betrieb auftretende Querkräfte die Funktion des Rotationssensors beeinträchtigen können.

Angesichts der vorangehend erläuterten Problematik ist es eine Aufgabe der vorliegenden Erfindung, eine weniger aufwendige Herstellung und eine höhere Betriebssicherheit zu ermöglichen.

### Darstellung der Erfindung

Diese Aufgabe wird erfindungsgemäß gelöst durch das Lenksystem mit den Merkmalen des Anspruchs 1 sowie ein Lenksystem für ein Kraftfahrzeug gemäß Anspruch 12. Vorteilhafte Weiterbildungen ergeben sich aus den Unteransprüchen.

Bei einem Lenkaktuator für ein Lenksystem für ein Kraftfahrzeug, umfassend eine translatorisch in ihrer Längsrichtung verschiebbare Aktuatorstange und eine zur Erfassung der linearen Position der Aktuatorstange ausgebildete Positionssensorvorrichtung, wobei die Positionssensorvorrichtung einen Rotationssensor umfasst, der eine um eine Achse drehbare Sensorwelle mit einem Laufrad aufweist, welches drehfest auf der Sensorwelle angebracht ist und auf einer korrespondierenden linearen Laufbahn der Aktuatorstange abrollbar ist, um eine translatorische Bewegung der Aktuatorstange in eine Rotation der Sensorwelle umzusetzen, ist erfindungsgemäß vorgesehen, dass der Rotationssensor quer zur Laufbahn nachgiebig angeordnet oder ausgestaltet ist.

Die lineare translatorische Verschiebung der Aktuatorstange wird in eine Drehung eines Laufrades umgesetzt, welches mit der drehbaren Achse, die gleichbedeutend auch als Sensorachse bezeichnet wird, eines Rotationssensors drehschlüssig verbunden. Der Rotationssensor ist bezüglich der Längsrichtung, welche der Richtung der Verschiebung der Aktuatorstange entspricht, relativ zur Aktuatorstange feststehend angeordnet, beispielsweise an einem Aktuatorgehäuse, in dem die Aktuatorstange verschieblich gelagert ist, und welches an der Karosserie des Kraftfahrzeugs fixiert ist. Die Achse der Sensorwelle ist dabei quer zur Längsrichtung angeordnet, bevorzugt senkrecht zur Längsrichtung.

Erfindungsgemäß ist vorgesehen, dass der Rotationssensor quer zur Laufbahn nachgiebig angeordnet oder ausgestaltet ist. Falls im Betrieb quer zur Längsrichtung zwischen der Aktuatorstange und dem Rotationssensor wirkende Querkräfte auftreten, beispielsweise durch thermische Effekte, Lastwechsel oder dergleichen, könnte dadurch die Ankopplung des Rotationssensors beeinträchtigt werden, was zu übermäßiger Materialbeanspruchung, Geräuschbildung und erhöhtem Verschleiß führen könnte. Dadurch, dass der Rotationssensor erfindungsgemäß nachgiebig angebunden ist, kann er als Reaktion auf Querkräfte seitlich ausweichen, wodurch potentiell schädliche Materialspannungen und erhöhte Reibung vermieden werden. Dadurch kann mit Vorteil die langfristige Betriebssicherheit und Laufruhe erhöht werden.

Eine Möglichkeit zur Realisierung einer nachgiebigen Anordnung ist, dass der Rotationssensor relativ zur Aktuatorstange bewegbar gelagert ist. Es kann beispielsweise eine quer zur Längsrichtung verschiebbare oder verschwenkbare Lageranordnung zwischen Rotationssensor und Aktuatorgehäuse angebracht sein. Dadurch kann der Rotationssensor als Ganzes quer zur Aktuatorstange ausweichen. Ein Vorteil dabei ist, dass eine komplette Sensorbaugruppe des Rotationssensors, die beispielsweise als Zulieferteil bereitgestellt werden kann, einfach an einer nachgiebigen Lagerung montiert werden kann. Es ist auch denkbar, dass zumindest die Sensorwelle in dem Rotationssensor quer zur Achse translatorisch bewegbar gelagert ist.

Es können im Prinzip sämtliche Lageranordnungen zum Einsatz kommen, die eine relative Ausweichbewegung der erfindungsgemäß nachgiebig zueinander angeordneten Funktionselemente der Positionssensorvorrichtung als Reaktion auf quer zur Sensorwelle wirkende Querkräfte erlauben. Eine konstruktiv einfache und betriebssichere nachgiebige Lagerung kann beispielsweise durch ein Translations- oder Schwenklager realisiert sein, welches ein Gleit- oder Wälzlager, oder ein verformbares Lagerelement umfassen kann.

Eine weitere vorteilhafte Realisierung einer nachgiebigen Anordnung kann dadurch geschaffen werden, dass das Laufrad und/oder die Laufbahn mindestens ein nachgiebig ausgestaltetes Ausgleichselement aufweist. Das Ausgleichselement ist dabei zwischen zwei funktionalen Elementen der Positionssensorvorrichtung angeordnet, zwischen denen die besagten Querkräfte auftreten können und die erfindungsgemäß relativ zueinander nachgiebig bewegbar angeordnet sind. Beispielsweise kann das Laufrad über ein Ausgleichselement nachgiebig bewegbar relativ zur Sensorwelle gehalten sein, oder alternativ oder zusätzlich kann die Laufbahn über ein Ausgleichelement nachgiebig bewegbar relativ zur Aktuatorstange gehalten sein. Es ist auch denkbar und möglich, zusätzlich oder alternativ ein Ausgleichselement zwischen dem Laufrad und der Laufbahn anzuordnen oder auszubilden, beispielsweise außen an dem Laufrad oder auf der Laufbahn, die beispielsweise eine nachgiebig verformbare Schicht umfassen kann. Eine derartige nachgiebige Schicht kann aus einem verformbaren Material bestehen oder eine verformbare Struktur aufweisen, und beispielsweise zwischen den Verzahnungen des Zahnrads und der Zahnstange angeordnet sein, zwischen dem Zahnrad und der Sensorwelle, oder zwischen der Zahnstange und der Aktuatorstange.

Das auf der Achse angebrachte Laufrad kontaktiert mit seinem Außenumfang die in Längsrichtung an der Aktuatorstange angeordnete Laufbahn, welche sich in Richtung der Verschiebung erstreckt. Dadurch rollt der Außenumfang bei einem Lenkeinschlag auf der Laufbahn ab, und das Laufrad wird um den Betrag der linearen Verschiebung der Aktuatorstange gedreht. Soweit das Laufrad schlupffrei abrollt, was durch geeignete Maßnahmen sichergestellt werden kann, ist dabei die Drehung der Achse eindeutig mit der Verschiebung der Aktuatorstange korreliert. Entsprechend gibt die Rotations- oder Drehposition der Achse die lineare Position der Aktuatorstange an.

Als Rotationssensor kann ein elektronischer Winkelsensor eingesetzt werden, der eine für die geforderte Messgenauigkeit erforderliche Winkelauflösung aufweist, und der hinsichtlich seiner Abmessungen und Betriebseigenschaften für den Einsatz im Kraftfahrzeug geeignet ist. Es sind beispielsweise opto-elektronische, induktive, kapazitive oder nach anderen Messverfahren arbeitende elektronische Sensoren bekannt, die messgenau, robust und unempfindlich gegenüber den im Betrieb auftretenden mechanischen und thermischen Belastungen sind, beispielsweise durch Vibrationen und Temperaturschwankungen. Dadurch, dass ein derartiger Sensor erfindungsgemäß nur über die drehbare Sensorwelle mechanisch an die Aktuatorstange angekoppelt ist, kann die eigentliche Messsensorik mit geringem Aufwand gegen äußere Störeinflüsse sicher geschützt untergebracht werden. Es können beispielsweise Rotationsensoren in einer gekapselten Bauform eingesetzt werden, bei denen die Sensorwelle abgedichtet durch ein geschlossenes Sensorgehäuse nach außen geführt ist, so dass der Sensor weitgehend geschützt ist gegen Störeinflüsse durch Schmiermittel, Staub oder dergleichen, die im Bereich der Aktuatorstange auftreten können. Dadurch kann eine hohe Messgenauigkeit und Betriebssicherheit gewährleistet werden.

Es können kommerziell erhältliche Rotationssensoren eingesetzt werden, wobei lediglich ein an die jeweilige Bauform der Aktuatorstange angepasstes Laufrad bereitgestellt und montiert werden muss. Dadurch kann mit relativ geringem Aufwand eine flexible und kostengünstige Konstruktion und Fertigung realisiert werden.

Bevorzugt ist vorgesehen, dass die Aktuatorstange in einem Aktuatorgehäuse verschiebbar gelagert ist, wie dies von der gattungsgemäßen Bauform eines Lenkaktuators im Grunde bekannt ist. Der Rotationssensor kann bevorzugt an dem Aktuatorgehäuse angebracht sein, oder auch darin integriert untergebracht. Die Sensorwelle kann ebenfalls in dem Aktuatorgehäuse gelagert sein, was den Vorteil hat, dass das Laufrad eindeutig bezüglich der Laufbahn positioniert ist. Zur Anbringung im Kraftfahrzeug kann das Aktuatorgehäuse Verbindungs- oder Befestigungsmittel aufweisen, wie dies aus dem Stand der Technik im Prinzip bekannt ist.

Die Aktuatorstange kann als Zahnstange ausgebildet sein, oder eine solche aufweisen, wie dies von Lenkgetrieben von Zahnstangenlenkungen im Stand der Technik im Prinzip bekannt ist.

Es kann vorgesehen sein, dass ein motorischer Antrieb zur translatorischen Verlagerung der Aktuatorstange vorgesehen ist. Der motorische Antrieb ist bevorzugt ein elektromotorischer Antrieb, der gleichbedeutend auch als Lenkantrieb bezeichnet wird. Dieser umfasst einen elektrischen Motor, der mit Getriebemitteln zur Umsetzung der Drehung der Motorwelle in eine Längsverschiebung der Aktuatorstange gekuppelt ist. Beispielsweise kann der motorische Antrieb einen Spindeltrieb aufweisen, mit einer koaxial an der Aktuatorstange angeordneten Gewindespindel, die in eine in dem Aktuatorgehäuse in Längsrichtung abgestützte, von dem Motor drehend antreibbare Spindelmutter eingreift. Bevorzugt kann der Spindeltrieb als laufruhiger und leichtgängiger Kugelgewindetrieb ausgebildet sein.

Alternativ ist es denkbar und möglich, dass der motorische Antrieb ein Lenkritzel drehend antreibt, welches an einer Lenkwelle oder einer Antriebswelle des motorischen Antriebs oder eines Hilfskraftantriebs angebracht ist, welches mit einer in Längsrichtung erstreckten Zahnstange der Aktuatorstange in Eingriff steht.

Es kann bevorzugt vorgesehen sein, dass das Laufrad als Zahnrad ausgebildet ist und die Laufbahn als Zahnstange. Der Verzahnungseingriff sorgt für eine im Wesentlichen schlupffreie und nahezu spielfreie, formschlüssige Umsetzung der linearen Verschiebung der Aktuatorstange in eine korrespondierende Drehung der mit dem Zahnrad verbundenen Sensorwelle. Dadurch kann eine präzise, robuste und betriebssichere Positionsmessung gewährleistet werden. Die Zahnstange kann direkt an der Aktuatorstange ausgebildet sein, oder als separates Bauteil daran angebracht sein.

Es ist möglich, dass das Laufrad mit der Zahnstange in Eingriff steht, in die auch das Lenkritzel eines Antriebs zur Verschiebung der Aktuatorstange eingreift. Dies ermöglicht eine kompakte Bauform.

Gemäß einer vorteilhaften Weiterbildung der Erfindung kann vorgesehen sein, dass das Laufrad gegen die Laufbahn elastisch vorgespannt ist. Dadurch, dass das Laufrad elastisch federnd gegen die Laufbahn angedrückt wird, kann ein optimiertes, unter allen Betriebsbedingungen nahezu spiel- und schlupffreies Abrollen gewährleistet werden. Gleichzeitig kann durch die elastische Verformbarkeit die erfindungsgemäß nachgiebige Lagerung realisiert sein.

Die elastische Kraft, beispielsweise die Federkraft, der Vorspannung wird bevorzugt in einer Größe vorgegeben, die geringer ist als eine maximal zulässige Querkraft, die auf die Positionssensorvorrichtung einwirken kann, ohne deren Funktion zu beeinträchtigen. Dadurch werden auch langfristig Verschleiß und Beschädigungen wirksamverhindert, und entsprechend wird die Betriebssicherheit erhöht.

Um die vorgenannte Vorspannung zu erzeugen, kann vorgesehen sein, dass der Rotationssensor gegen die Aktuatorstange elastisch vorgespannt ist. Dabei kann der Rotationssensor als Ganzes quer gegen die Aktuatorstange federbelastet sein, beispielsweise durch gegen das Aktuatorgehäuse abgestützte Federelemente, die metallisch oder auch gummiartig ausgebildet sein können. Zumindest kann die Sensorwelle im Bereich der Laufbahn federnd gegen die Aktuatorstange angedrückt werden. Derartige Federelemente sind in den erforderlichen Abmessungen und elastischen Eigenschaften bekannt und allgemein verfügbar. Die Konstruktion und Fertigung kann mit geringem Aufwand erfolgen.

In einer vorteilhaften Ausführung kann vorgesehen sein, dass das Laufrad und/oder die Laufbahn mindestens ein elastisches Federelement aufweist. Das Federelement sorgt dafür, dass das Laufrad und die Laufbahn im Bereich des Rollkontakts federnd gegeneinander angedrückt werden. Mittels des Federelements kann das Laufrad in sich elastisch ausgestaltet oder relativ zur Sensorwelle gehalten sein, beispielsweise durch eine in radialer Richtung elastisch verformbare Nabenanordnung oder dergleichen. Es ist auch möglich, ein Federelement zwischen der Laufbahn, beispielsweise einer Zahnstange, und der Aktuatorstange anzubringen, beispielsweise in Form einer gummielastischen Schicht oder einer anderen flachen Federanordnung, beispielsweise mit Blatt- oder Wellfedern. Alternativ oder zusätzlich kann ein Federelement kann außen an dem Laufrad oder an der Laufbahn angeordnet oder ausgebildet sein, beispielsweise als elastische, gummiartige Schicht zwischen den Verzahnungen des Zahnrads und der Zahnstange, die an dem Zahnrad oder der Zahnstange angebracht sein kann. Beispielsweise können die Zähne des Zahnrads oder/und der Zahnstange ganz oder teilweise gummielastisch ausgebildet sein, beispielsweise durch eine Beschichtung mit einem elastischen Material.

Bevorzugt kann ein Ausgleichselement als Federelement ausgebildet sein. In seiner Funktion als Ausgleichselement ermöglicht es durch seine Verformbarkeit die nachgiebige Beweglichkeit, und zusätzlich kann es dadurch, dass es selbst elastisch ausgestaltet ist, auch für die elastische Vorspannung sorgen. Durch diese Integration der Funktionen in einem Bauelement kann eine besonders vorteilhafte, kompakte leichte und funktionssichere Positionssensorvorrichtung realisiert werden, welche einen relativ geringen Konstruktions- und Fertigungsaufwand erfordert.

Ein derartiges kombiniertes Ausgleich- und Federelement kann beispielsweise durch eine Schicht oder eine andere Struktur aus einem gummielastischen Material realisiert sein, welches beispielsweise im Spritzgussverfahren angespritzt werden kann, was eine rationelle Fertigung ermöglicht.

Bei einem Lenksystem für ein Kraftfahrzeug, umfassend einen mit mindestens einem lenkbaren Rad wirkverbundenen Lenkaktuator, ist erfindungsgemäß vorgesehen, dass der Lenkaktuator ausgebildet ist gemäß einer der vorangehend beschriebenen Ausführungsformen. Dabei können sämtliche Kombinationen der beschriebenen Merkmale realisiert sein.

Bevorzugt kann das Lenksystem als Steer-by-Wire-Lenksystem ausgebildet sein. Dabei hat der Lenkaktuator keine mechanische Verbindung zur manuellen Lenkeingabe, und zur translatorischen Verlagerung der Aktuatorstange ist ausschließlich ein motorischer Antrieb vorgesehen, der zur Erzeugung eines Lenkeinschlags von einer Steuereinheit durch elektrische Steuersignale angesteuert wird.

Der Rotationssensor kann an eine elektrische Steuereinheit angeschlossen sein, um die elektrischen Positionssignale zu erfassen und auszuwerten. Bevorzugt handelt es sich dabei um die Steuereinheit eines Steer-by-Wire-Lenksystems, wodurch dank der erfindungsgemäßen Positionssensorvorrichtung eine betriebssichere Überwachung des Ist-Wertes des Lenkeinschlags eines lenkbaren Rads ermöglicht wird.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische Darstellung eines erfindungsgemäßen Steer-by-wire-Lenksystems
- Figur 2: einen erfindungsgemäßer Lenkaktuator des Lenksystems gemäß Figur 1 in einer perspektivischen Darstellung,
- Figur 3: einen Querschnitt durch einen Lenkaktuator gemäß Figur 2 in einer ersten Ausführungsform,
- Figur 4: einen Querschnitt durch einen Lenkaktuator gemäß Figur 2 in einer zweiten Ausführungsform,
- Figur 5: einen Querschnitt durch einen Lenkaktuator gemäß Figur 2 in einer dritten Ausführungsform,
- Figur 6: eine schematische perspektivische Teilansicht des Lenkaktuators gemäß Figur 2 mit der Aktuatorstange und einer erfindungsgemäßen Positionssensorvorrichtung gemäß einer der Figuren 3, 4, oder 5.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

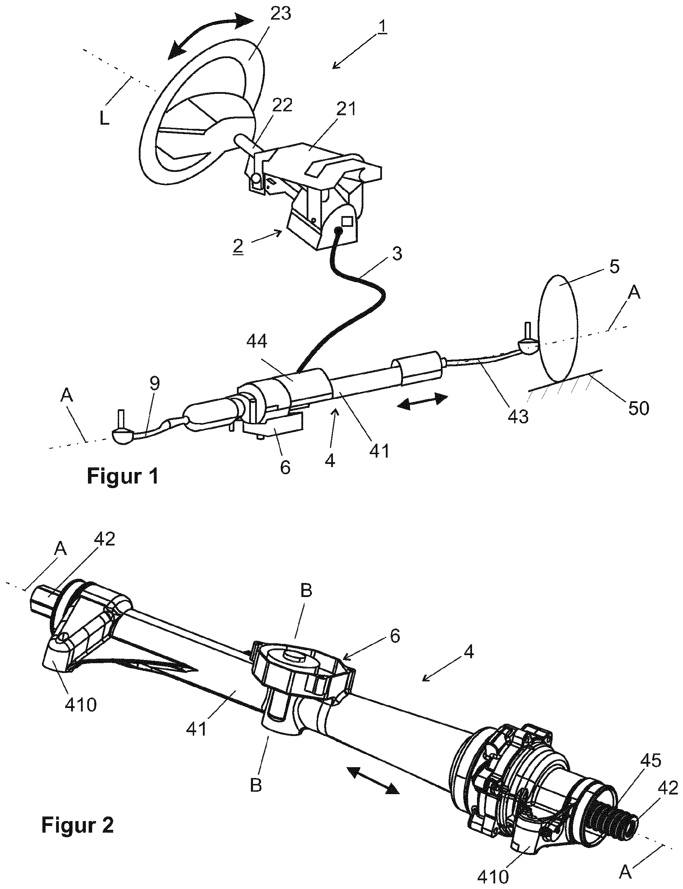

Figur 1 zeigt schematisch ein Steer-by-wire-Lenksystem 1, welches eine Lenksäule 2 umfasst. Diese weist eine an einer nicht gezeigten Fahrzeugkarosserie montierbare Trageinheit 21 auf, von der eine Lenkspindel 22 um ihre Längsachse L drehbar gelagert ist. An ihrem bezüglich der Fahrtrichtung hinteren, fahrerseitigen Ende ist an der Lenkspindel 22 zur Eingabe manueller Lenkbefehle ein Lenkrad 23 drehfest montiert.

In der Lenksäule 2 ist eine im Einzelnen nicht dargestellte Drehwinkel- und Drehmomenterfassungssensorik untergebracht, welche eine als Drehung des Lenkrads 23 in die Lenkspindel 22 eingebrachten Lenkbefehl in ein elektrisches Steuersignal, nämlich ein Lenksignal umsetzt.

Das Steuersignal wird über eine elektrische Steuerleitung 3 an einen erfindungsgemäßen elektrischen Lenkaktuator 4 geleitet.

Der Lenkaktuator 4 - der in Detailansichten in den Figuren 2 bis 6 gezeigt ist - weist ein Aktuatorgehäuse 41 auf, welches Verbindungselemente 410 zur Anbringung des Lenkaktuators 4 an einer nicht dargestellten Fahrzeugkarosserie aufweist.

In dem Aktuatorgehäuse 41 ist eine Aktuatorstange 42, die sich entlang einer Achse A, der sogenannten Aktuatorachse A, quer zur Fahrtrichtung des Fahrzeugs erstreckt, in ihrer durch diese Achse A vorgegebenen Längsrichtung verschiebbar gelagert, wie mit dem Doppelpfeil angedeutet ist.

Die beiden äußeren Enden der Aktuatorstange 42 sind jeweils über eine Spurstange 43 mit einem lenkbaren Rad 5 verbunden, so dass eine Verschiebung der Aktuatorstange 42 einen Lenkeinschlag des gelenkten Rades 5 relativ zur Fahrbahn 50 bewirkt.

Zur Erzeugung eines Lenkeinschlags weist der Lenkaktuator 4 einen über die Steuerleitung 3 elektrisch ansteuerbaren elektro-motorischen Antrieb 44 auf, der einen im Einzelnen nicht bezeichneten, an dem Aktuatorgehäuse 41 angebrachten elektrischen Motor umfasst. Von dem Motor ist eine in dem Aktuatorgehäuse 41 drehend gelagerte, in Längsrichtung der Achse A abgestützte Spindelmutter drehend antreibbar, in die ein an der Aktuatorstange 42 ausgebildetes Spindelgewinde 45 eingreift. Auf diese Weise wird in an sich bekannter Weise ein linearer Spindeltrieb gebildet, bei dem durch entsprechende Drehrichtung des Motors die Aktuatorstange 42 relativ zur Aktuatorgehäuse 41 in Längsrichtung bewegt werden kann.

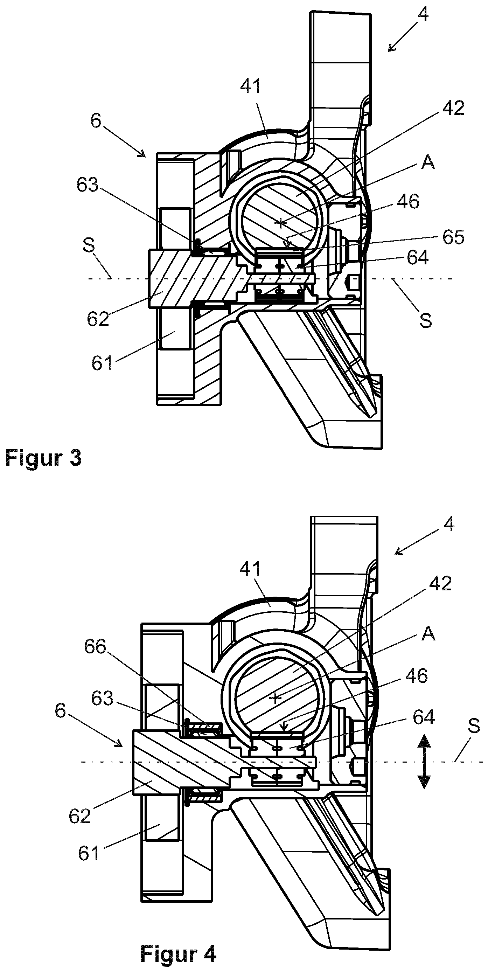

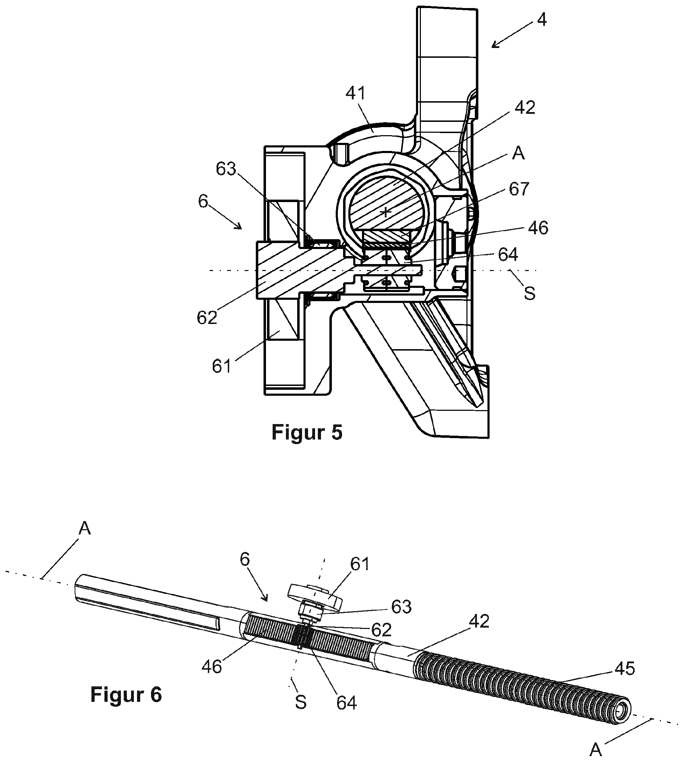

Der Lenkaktuator 4 weist eine erfindungsgemäße Positionssensorvorrichtung 6 auf, die im Detail in den Schnittansichten der Figuren 3, 4 und 5 dargestellt ist, welche jeweils einen Querschnitt B-B aus Figur 2 zeigen. In der schematischen Übersicht von Figur 6 ist das Aktuatorgehäuse 41 weggelassen ist und gibt einen Blick auf die Aktuatorstange 42 und die Positionssensorvorrichtung 6 frei.

Die Positionssensorvorrichtung 6 weist einen elektrischen Rotationssensor 62 auf, der nach einem einem an sich bekannten Messverfahren arbeiten kann, beispielsweise induktiv, kapazitiv, optisch oder dergleichen, und eine Drehung einer um eine Sensorachse S drehbar gelagerten Sensorwelle 62 als elektrischen Messwert erfasst.

Die Sensorwelle 62 ist in dem Aktuatorgehäuse 41 in einem Lager 63 drehbar gelagert, welches beispielsweise als Nadellager ausgebildet sein kann.

Die Sensorachse S der Sensorwelle 62 ist quer zur Achse A der Aktuatorstange 42 angeordnet.

Auf der Sensorwelle 62 ist drehfest ein Zahnrad 64 angebracht, welches ein Laufrad gemäß der Erfindung bildet, und das im Verzahnungseingriff in eine Zahnstange 46 eingreift, die an der Aktuatorstange 42 in Längsrichtung der Achse A erstreckt angebracht ist, und die eine Laufbahn im Sinne der Erfindung bildet. Diese Anordnung ist in der schematischen perspektivischen Absicht von Figur 6 gut erkennbar.

Eine lineare Verschiebung der Aktuatorstange 42 wird durch den Verzahnungseingriff weitgehend schlupffrei in eine Drehung der Sensorwelle 62 umgesetzt. Dadurch ist eine lineare Position der Aktuatorstange 42 relativ zum Aktuatorgehäuse 41 eindeutig mit einer Winkelposition der Sensorwelle 62 korreliert, die als elektrischer Messwert von dem Rotationssensor 61 erfasst und ausgegeben wird.

Die eigentliche elektrische Sensorik zur Erfassung der Winkelbewegung der Sensorwelle 62 kann gegen äußere Einflüsse geschützt in dem Rotationssensor 61 untergebracht sein, der als kommerziell erhältliche, nach außen abgedichtete Sensoreinheit bereitgestellt und montiert werden kann.

Figuren 3, 4 und 5 zeigen in derselben Ansicht verschiedene Ausführungsvarianten der Erfindung, wobei dieselben Bezugszeichen verwendet werden. Die unterschiedlichen Merkmale können gemäß jeder einzelnen Ausführung realisiert werden, wie dies in den Figuren gezeigt ist, oder auch in Kombination miteinander.

In der ersten Ausführung gemäß Figur 3 ist zwischen den Verzahnungen des Zahnrads 64 und der Zahnstange 46 ein gummielastisches Ausgleichselement 65 angeordnet. Dieses kann beispielsweise eine gummielastische Beschichtung auf den Zähnen des Zahnrads 64 und/oder der Zahnstange 46 umfassen, wobei das Zahnrad 64 und die Zahnstange 46 nachgiebig gegeneinander vorgespannt sind. Dabei kann das Ausgleichselement 65 Schwankungen des Abstands zwischen der Aktuatorstange 42 und der Sensorwelle 62, d.h. zwischen den entsprechenden Achsen A und S, nachgiebig ausgleichen, und gleichzeitig als Federelement dienen, das für eine elastisch federnde Vorspannung des Zahnrads 64 gegen die Zahnstange 46 sorgt, was vorteilhaft im Hinblick auf einen schlupf- und spielfreien Verzahnungseingriff ist. Ein Vorteil dieser Anordnung ist, dass potentiell nachteilige Querkräfte auf die Sensorwelle 62 elastisch aufgenommen und begrenzt werden.

Das Ausgleichselement 65 kann beispielsweise ein thermoplastisches Elastomer aufweisen welches an zumindest eine der Verzahnungen angespritzt sein kann, oder auf andere Weise damit verbunden sein kann.

Die in Figur 4 in derselben Ansicht wie in Figur 3 gezeigte zweite Ausführungsvariante weist ein Ausgleichselement 66 auf, welches zwischen dem Lager 63 und dem Aktuatorgehäuse 41 eingesetzt ist. Dieses kann ebenfalls bevorzugt aus einem gummielastischen Material ausgebildet sein, beispielsweise als das Lager 63 aufnehmende Buchse, so dass eine federnd nachgiebige Bewegung der Sensorachse 62 relativ zur Aktuatorstange 42 ermöglicht wird, wie mit dem Doppelpfeil an der Sensorachse S angedeutet ist. Dadurch wird das Zahnrad 64 gegen die Zahnstange 46 federnd in den Verzahnungseingriff angedrückt, und es kann nachgiebig relativ zur Achse A ausweichen.

Die in Figur 5 in derselben Ansicht wie in den Figuren 3 und 4 gezeigte dritte Ausführungsvariante weist ein Ausgleichselement 67 auf, welches zwischen der Zahnstange 46 und der Aktuatorstange 42 angeordnet ist. Dieses kann ebenfalls bevorzugt aus einem gummielastischen Material ausgebildet sein, so dass eine federnd nachgiebige Bewegung der Zahnstange 46 relativ zur Aktuatorstange 42 ermöglicht wird. Dadurch wird die Zahnstange 46 bezüglich der Achse A radial nach außen federnd gegen das Zahnrad 64 in den Verzahnungseingriff angedrückt, und kann dabei nachgiebig relativ zur Achse A ausweichen.

In allen gezeigten Ausführungen ist der Rotationssensor 61 gegen potentiell schädliche Einflüsse durch Schmiermittel, Staub und dergleichen besser geschützt als im Stand der Technik, und durch das Ausgleichselement 65, 66, 67 werden zwischen den Achsen A und S im Betrieb auftretende Querkräfte von dem Rotationssensor 61 abgehalten. Die Anordnungen der Ausgleichselemente 65, 66, 67 können bei Bedarf miteinander kombiniert werden.

### Bezugszeichenliste

- 1: Lenksystem
- 2: Lenksäule
- 21: Trageinheit
- 22: Lenkspindel
- 3: Steuerleitung
- 4: Lenkaktuator
- 41: Aktuatorgehäuse
- 410: Verbindungselement
- 42: Aktuatorstange
- 43: Spurstange
- 44: Antrieb
- 45: Spindelgewinde
- 46: Zahnstange (Laufbahn)
- 5: Fahrzeugrad
- 50: Fahrbahn
- 6: Positionssensorvorrichtung
- 61: Rotationssensor
- 62: Sensorwelle
- 63: Lager
- 64: Zahnrad (Laufrad)
- 65: Ausgleichselement (Federelement)
- 66: Ausgleichselement (Federelement)
- 67: Ausgleichselement (Federelement)

- L: Längsachse
- A: Achse (Aktuatorachse)
- S: Sensorachse

## Patentansprüche

1. Lenkaktuator (4) für ein Lenksystem (1) für ein Kraftfahrzeug, umfassend eine translatorisch in ihrer Längsrichtung verschiebbare Aktuatorstange (42) und eine zur Erfassung der linearen Position der Aktuatorstange (42) ausgebildete Positionssensorvorrichtung (6),
wobei die Positionssensorvorrichtung (6) einen Rotationssensor (61) umfasst, der eine um eine Achse (S) drehbare Sensorwelle (62) mit einem Laufrad (64) aufweist, welches drehfest auf der Sensorwelle (62) angebracht ist und auf einer korrespondierenden linearen Laufbahn (46) der Aktuatorstange (42) abrollbar ist, um eine translatorische Bewegung der Aktuatorstange (42) in eine Rotation der Sensorwelle (62) umzusetzen,
**dadurch gekennzeichnet,**
**dass** der Rotationssensor (61) quer zur Laufbahn (46) nachgiebig angeordnet oder ausgestaltet ist.

2. Lenkaktuator nach Anspruch 1, **dadurch gekennzeichnet, dass** die Aktuatorstange (42) in einem Aktuatorgehäuse (41) verschiebbar gelagert ist.

3. Lenkaktuator nach einem der vorangehenden Ansprüche, **dadurch gekennzeichnet, dass** das Laufrad als Zahnrad (64) ausgebildet ist und die Laufbahn als Zahnstange (46).

4. Lenkaktuator nach einem der vorangehenden Ansprüche, **dadurch gekennzeichnet, dass** der Rotationssensor (61) relativ zur Aktuatorstange (42) bewegbar gelagert ist.

5. Lenkaktuator nach einem der vorangehenden Ansprüche, **dadurch gekennzeichnet, dass** das Laufrad (64) und/oder die Laufbahn (46) mindestens ein nachgiebig ausgestaltetes Ausgleichselement (65, 67) aufweist.

6. Lenkaktuator nach einem der vorangehenden Ansprüche, **dadurch gekennzeichnet, dass** das Laufrad (64) gegen die Laufbahn (46) elastisch vorgespannt ist.

7. Lenkaktuator nach einem der vorangehenden Ansprüche, **dadurch gekennzeichnet, dass** der Rotationssensor (61) gegen die Aktuatorstange (42) elastisch vorgespannt ist.

8. Lenkaktuator nach einem der vorangehenden Ansprüche, **dadurch gekennzeichnet, dass** das Laufrad (64) und/oder die Laufbahn (46) mindestens ein elastisches Federelement (65, 67) aufweist.

9. Lenkaktuator nach Anspruch 8, **dadurch gekennzeichnet, dass** das Federelement als Ausgleichselement (65, 66, 67) ausgebildet ist.

10. Lenkaktuator nach einem der vorangehenden Ansprüche, **dadurch gekennzeichnet, dass** ein motorischer Antrieb zur translatorischen Verlagerung der Aktuatorstange (42) vorgesehen ist.

11. Lenkaktuator nach einem der vorangehenden Ansprüche, **dadurch gekennzeichnet, dass** ein Zahnstangen-Lenkgetriebe mit einem drehend antreibbaren Lenkritzel vorgesehen ist, welches in eine Verzahnung der Aktuatorstange (42) eingreift.

12. Lenksystem (1) für ein Kraftfahrzeug, umfassend einen mit mindestens einem lenkbaren Rad (5) wirkverbundenen Lenkaktuator (4), **dadurch gekennzeichnet, dass** der Lenkaktuator (4) ausgebildet ist nach einem der Ansprüche 1 bis 11.

13. Lenksystem nach Anspruch 12, **dadurch gekennzeichnet, dass** es als Steer-by-Wire-Lenksystem (1) ausgebildet ist.

14. Lenksystem nach einem der Ansprüche 12 bis 13, **dadurch gekennzeichnet, dass** der Rotationssensor (61) an eine elektrische Steuereinheit angeschlossen ist.

## Claims

1. Steering actuator (4) for a steering system (1) for a motor vehicle, comprising an actuator rod (42) which can be displaced in translation in the longitudinal direction thereof and a position sensor apparatus (6) which is constructed to detect the linear position of the actuator rod (42),
wherein the position sensor apparatus (6) comprises a rotation sensor (61) which has a sensor shaft (62) which can be rotated about an axis (S) and which has a running wheel (64) which is fitted in a rotationally secure manner to the sensor shaft (62) and which can roll on a corresponding linear track (46) of the actuator rod (42) in order to convert a translational movement of the actuator rod (42) into a rotation of the sensor shaft (62),
**characterised in that**
the rotation sensor (61) is arranged or configured so as to be flexible transversely relative to the track (46).

2. Steering actuator according to Claim 1, **characterised in that** the actuator rod (42) is displaceably supported in an actuator housing (41).

3. Steering actuator according to either of the preceding claims, **characterised in that** the running wheel is constructed as a gear (64) and the track is constructed as a toothed rack (46).

4. Steering actuator according to any one of the preceding claims, **characterised in that** the rotation sensor (61) is movably supported relative to the actuator rod (42).

5. Steering actuator according to any one of the preceding claims, **characterised in that** the running wheel (64) and/or the track (46) has at least one compensation element (65, 67) which is configured in a flexible manner.

6. Steering actuator according to any one of the preceding claims, **characterised in that** the running wheel (64) is resiliently pretensioned against the track (46).

7. Steering actuator according to any one of the preceding claims, **characterised in that** the rotation sensor (61) is resiliently pretensioned against the actuator rod (42).

8. Steering actuator according to any one of the preceding claims, **characterised in that** the running wheel (64) and/or the track (46) has at least one resilient spring element (65, 67).

9. Steering actuator according to Claim 8, **characterised in that** the resilient element is constructed as a compensation element (65, 66, 67).

10. Steering actuator according to any one of the preceding claims, **characterised in that** a motorised drive for translational displacement of the actuator rod (42) is provided.

11. Steering actuator according to any one of the preceding claims, **characterised in that** there is provided a rack and pinion steering gear mechanism having a rotatably drivable steering pinion which engages in a tooth arrangement of the actuator rod (42).

12. Steering system (1) for a motor vehicle, comprising a steering actuator (4) which is operationally connected to at least one steerable wheel (5), **characterised in that** the steering actuator (4) is constructed according to any one of Claims 1 to 11.

13. Steering system according to Claim 12, **characterised in that** it is constructed as a steer-by-wire steering system (1).

14. Steering system according to any one of Claims 12 to 13, **characterised in that** the rotation sensor (61) is connected to an electrical control unit.

## Revendications

1. Actionneur de direction (4) pour un système de direction (1) pour un véhicule à moteur, comprenant une tige d'actionneur (42) qui peut être déplacée en translation dans sa direction longitudinale et un dispositif de détection de position (6) qui est conçu pour détecter la position linéaire de la tige d'actionneur (42),
dans lequel le dispositif de détection de position (6) comprend un capteur de rotation (61) qui comporte un arbre de capteur (62) pouvant tourner autour d'un axe (S) et qui comporte une roue de roulement (64) qui est montée de manière solidaire en rotation sur l'arbre de capteur (62) et qui peut rouler sur une piste linéaire correspondante (46) de la tige d'actionnement (42) afin de convertir un mouvement de translation de la tige d'actionnement (42) en une rotation de l'arbre de capteur (62),
**caractérisé en ce que**
le capteur de rotation (61) est agencé ou configuré de manière à être flexible transversalement par rapport à la piste (46).

2. Actionneur de direction selon la revendication 1, **caractérisé en ce que** la tige d'actionneur (42) est supportée de manière déplaçable dans un boîtier d'actionneur (41).

3. Actionneur de direction selon l'une quelconque des revendications précédentes, **caractérisé en ce que** la roue de roulement est réalisée sous forme d'engrenage (64) et la voie est réalisée sous forme de crémaillère (46).

4. Actionneur de direction selon l'une quelconque des revendications précédentes, **caractérisé en ce que** le capteur de rotation (61) est supporté de manière mobile par rapport à la tige d'actionneur (42).

5. Actionneur de direction selon l'une quelconque des revendications précédentes, **caractérisé en ce que** la roue de roulement (64) et/ou la crémaillère (46) comporte au moins un élément de compensation (65, 67) qui est configuré de manière flexible.

6. Actionneur de direction selon l'une quelconque des revendications précédentes, **caractérisé en ce que** la roue de roulement (64) est précontrainte de manière élastique contre la crémaillère (46).

7. Actionneur de direction selon l'une quelconque des revendications précédentes, **caractérisé en ce que** le capteur de rotation (61) est précontraint de manière élastique contre la tige d'actionnement (42).

8. Actionneur de direction selon l'une quelconque des revendications précédentes, **caractérisé en ce que** la roue (64) et/ou la chenille (46) comporte au moins un élément élastique (65, 67).

9. Actionneur de direction selon la revendication 8, **caractérisé en ce que** l'élément élastique est réalisé sous la forme d'un élément de compensation (65, 66, 67).

10. Actionneur de direction selon l'une quelconque des revendications précédentes, **caractérisé en ce qu'**un entraînement motorisé est prévu pour le déplacement en translation de la tige d'actionneur (42).

11. Actionneur de direction selon l'une quelconque des revendications précédentes, **caractérisé en ce qu'**il est prévu un mécanisme de direction à crémaillère et pignon comportant un pignon de direction pouvant être entraîné en rotation qui s'engrène dans une denture de la tige d'actionneur (42).

12. Système de direction (1) pour un véhicule automobile, comprenant un actionneur de direction (4) qui est relié de manière opérationnelle à au moins une roue orientable (5), **caractérisé en ce que** l'actionneur de direction (4) est construit selon l'une quelconque des revendications 1 à 11.

13. Système de direction selon la revendication 12, **caractérisé en ce qu'**il est conçu comme un système de direction à commande électrique (1).

14. Système de direction selon l'une quelconque des revendications 12 à 13, **caractérisé en ce que** le capteur de rotation (61) est relié à une unité de commande électrique.
